# EUROPÄISCHE PATENTSCHRIFT

(11) **EP 0 508 051 B1**
(45) Veröffentlichungstag und Bekanntmachung des Hinweises auf die Patenterteilung: **07.05.1997**
(21) Anmeldenummer: 92101733.1
(22) Anmeldetag: 03.02.1992
(51) Int. Cl.: C08G 59/16, C09D 163/00

(54) **Beschichtungsmittel**
Binder for coatings
Liant pour revêtement

(30) Priorität: 13.04.1991 DE 4112144
(43) Veröffentlichungstag der Anmeldung: 14.10.1992
(73) Patentinhaber: Bakelite AG, 58642 Iserlohn-Letmathe (DE)
(72) Erfinder: Grundke, Ulrich, W-4100 Duisburg 12 (DE); Peters, Karl-Heinz, W-4200 Oberhausen (DE); Zehrfeld, Jürgen, Dr., W-4223 Voerde (DE)

(56) Entgegenhaltungen:
- CH-A- 473 143
- DE-B- 1 695 171
- GB-A- 907 844
- US-A- 2 759 901
- JOURNAL OF APPLIED POLYMER SCIENCE Bd. 30, Nr. 7, Juli 1985, NEW YORK US Seiten 2907-2920 WENG-LIANG LIU, E.A. 'The Synthesis and Properties of Tetrafunctional Epoxy Resins'

## Beschreibung

Die Erfindung betrifft Beschichtungsmittel auf der Basis von polyfunktionellen Epoxidharzen und Härtern, die bevorzugt als Einbrennlacke eingesetzt werden. In diesen Anwendungsbereichen zeigen Epoxidharze allgemein gute Haftungs- und Korrosionsschutzeigenschaften, sowie eine gute Chemikalien- und Temperaturbeständigkeit.

Nachteilig bei diesen Beschichtungsmitteln ist der schlechte Verlauf, der durch die hohe Oberflächenspannung der eingesetzten Bindemittel bedingt ist und der häufig unerwünschte Unregelmäßigkeiten der aufgebrachten Lackschicht ergibt. Durch Zusätze von speziellen Additiven läßt sich dieser Mangel nur teilweise beheben, jedoch treten dadurch wieder andere Nachteile auf. Werden nämlich derartig hergestellte Einbrennlacke unter extremen Bedingungen wie z. B. im Hochvakuum oder bei hohen Temperaturen eingesetzt, neigen die Additive zum Ausgasen bzw. Ausschwitzen. Zudem entstehen Probleme mit der Zwischenschichthaftung bei nachfolgender zusätzlicher Beschichtung bzw. Vergütung.

Bessere Verlaufseigenschaften zeigen Partialester von Epoxidharzen auf Basis von zweiwertigen Phenolen gemäß US-A-2 759 901 sowie die aus CH-A 473 143 und DE-A 16 95 171 bekannten Partialester von Triglycidylisocyanurat, jedoch ist auch bei Verwendung dieser Beschichtungsmittel die Oberflächengüte noch nicht ausreichend.

Es ist daher die Aufgabe der Erfindung, ein Beschichtungsmittel bereitzustellen, das einerseits die gleichen guten Eigenschaften wie die bislang verwendeten Epoxidharze zeigt, das aber ohne zusätzliche Additive oder externe Modifizierungsmittel einen wesentlich besseren Verlauf aufweist, wenn es auf eine Oberfläche aufgebracht wird.

Die Lösung der Aufgabe erfolgt durch Beschichtungsmittel gemäß den Ansprüchen 1 bis 4, sowie durch ein Verfahren zu ihrer Herstellung gemäß Anspruch 5.

Es wurde gefunden, daß die Haftungs- und Korrosionsschutzeigenschaften sowie die gute Chemikalien- und Temperaturbeständigkeit erhalten bleiben, wenn als Beschichtungsmittel Epoxidverbindung-Härter-Kombinationen eingesetzt werden, die als Epoxidkomponente Umsetzungsprodukte aus stickstoffhaltigen, polyfunktionellen Epoxidverbindungen und gesättigten oder ungesättigten Monocarbonsäuren enthalten, bei denen 5 bis 70 % der Epoxidgruppen, bevorzugt 10 bis 40 % der Epoxidgruppen mit Monocarbonsäuren mit mindestens 3 C-Atomen verestert sind.

Erfindungsgemäße polyfunktionelle Epoxidverbindungen sind Umsetzungsprodukte aus Epichlorhydrin und mindestens einer di- oder polyfunktionellen stickstoffhaltigen Verbindung aus der Gruppe Dodecylhydro-1,4,7,9'-tetraazaphenalen, Anilin, Xylylendiamine, p-Phenylendiamin insbesondere aber 4,4'-Methylendianilin und 4,4'-Diaminodiphenylsulfon.

Die Herstellung entsprechender Epoxidverbindungen erfolgt in an sich bekannter Weise wie sie z. B. auch in Lee und Neville, Handbook of Epoxy Resins, McGraw-Hill Book Company (1967) beschrieben ist.

Die bevorzugten Epoxidverbindungen sind Tetraglycidyl-methylendianilin (TGMDA) und Tetraglycidyl-diaminodiphenylsulfon (TGDDS).

Monocarbonsäuren, mit denen die Epoxidverbindungen partiell umgesetzt sind, sind gesättigte oder ungesättigte, verzweigte oder unverzweigte Monocarbonsäuren mit einer aliphatischen Kette mit mindestens 3 C-Atomen. Beispiele sind Propionsäure, Acrylsäure, Stearinsäure, Ölsäure und andere natürliche und synthetische Fettsäuren oder die verschiedenen Versatic ^{R} -Säuren.

Die Umsetzung der Epoxidverbindungen mit den Fettsäuren erfolgt in einem Molverhältnis (Epoxidgruppen zu Carboxylgruppen), dergestalt daß zwischen 5 und 70 % der vorhandenen Epoxidgruppen verestert sind. Vorzugsweise werden zwischen 10 und 40 % der Epoxidgruppen umgesetzt, wobei die Wärmestabilität (Tg) des gehärteten Lackfilms maßgebend ist.

Die hochviskosen Produkte werden zur Einstellung der gewünschten Applikationsviskosität mit den in der Lackindustrie üblichen Lösemitteln verdünnt.

Die so erhaltenen Epoxidbindemittel werden mit den in der Epoxidchemie üblichen Härtungsmitteln gehärtet. Der Härtungsprozeß setzt langsam ein. Je nach Auswahl des Härters verbleibt eine Verarbeitungszeit bei Raumtemperatur von 6 h bis zu einigen Tagen. In dieser Zeit werden sie mittels an sich bekannter Verfahren, etwa durch Rollen oder Spritzen, auf die zu beschichtenden Oberflächen aufgebracht und danach gehärtet. Der Härtungsprozeß wird durch Erhöhen der Temperatur beschleunigt. Bevorzugt werden die aufgebrachten Beschichtungsmittel bei Temperaturen von 60 bis 120 °C "eingebrannt".

Nach dem Aufbringen der Beschichtungsmittel auf die entsprechenden Metall- oder Kunststoff-Oberflächen und auch während des Geliervorganges zeigen diese Beschichtungsmittel einen einwandfreien Verlauf, der eine Oberflächengüte bewirkt, die den höchsten technischen Anforderungen, wie sie etwa in der Raumfahrt notwendig sind, entspricht. Die Ausbildung von extrem glatten Oberflächen mit einer Rauhtiefe von 0,5 bis 1 µm ist durch übliche Lackierung mit herkömmlichen Beschichtungsmitteln nicht möglich, da die vom Untergrund vorgegebenen Unebenheiten der Oberfläche mit Rauhtiefen von 5 bis 10 µm durch die Auftrocknung des Lackes infolge des eintretenden Schrumpfes in zwar verminderter (3 bis 7 µm) aber deutlicher Form auf der Lackoberfläche abgebildet werden.

In dem erfindungsgemäßen Bindemittel wirkt die Viskositätserhöhung als Folge der Summe aus Lösemittelverdampfung und beginnender Vernetzungsreaktion der Viskositätserniedrigung infolge der Temperaturerhöhung beim Einbrennen so synchron entgegen, daß sowohl ein optimaler Ausgleich der Unebenheiten des Untergrunds durch das bereits lösungsmittelfreie Beschichtungsmaterial stattfindet, als auch ein Ablaufen von senkrechten Flächen wegen der Viskositätserhöhung vermieden wird. Die endgültige Vernetzungsreaktion erfolgt nach Ausbildung einer enorm hochwertigen, glatten Oberfläche.

### Beispiele

### Beispiel 1 (Vergleichsbeispiel)

In einem Dreihalskolben mit Rührwerk, Thermometer und Rückflußkühler wird 1 Mol (= 619 g) eines Phenol-Novolak-Epoxidharzes mit einer durchschnittlichen Funktionalität von 3,5 vorgelegt und auf 80 °C erhitzt. Bei dieser Temperatur wird 1 Mol (= 284,5 g) Stearinsäure langsam zugegeben und solange bei 80 °C gerührt bis eine Säurezahl von 1 mg KOH/g erreicht ist. Danach wird mit Xylol auf 70 % Festkörper verdünnt.

### Beispiel 2

In einem Dreihalskolben mit Rührwerk, Thermometer und Rückflußkühler wird 1 Mol (= 480 g) Tetraglycidylmethylendianilin vorgelegt und auf 80 °C erhitzt. Bei dieser Temperatur werden 284,5 g (= 1 Mol) Stearinsäure langsam zugegeben und solange bei 80 °C gerührt bis eine Säurezahl von 1 mg KOH/g errreicht ist. Danach wird mit Xylol auf 70 % Festkörper verdünnt.

### Beispiel 3

Die beiden Lackharzlösungen aus den Beispielen 1 und 2 werden jeweils mit der äquimolaren Menge an 3,3-Dimethyl-4,4-diaminodicyclohexylmethan vermischt. Danach werden durch Zugabe eines Gemisches aus Propylenglykolmonomethylether und Xylol im Volumenverhältnis von 3 : 2 die Applikationsviskositäten (30 sec im DIN-Becher, 4 mm) eingestellt.

Mit den so hergestellten Beschichtungsmitteln werden jeweils Metalloberflächen beschichtet, die eine herstellungsbedingte Rauhtiefe von 10 µm besitzen. Die Beschichtungen werden getrocknet und danach während 30 min bei 120 °C gehärtet.

Es werden in beiden Fällen gut haftende Oberflächen mit guter Chemikalien- und Temperaturbeständigkeit erhalten.

Bei Beschichtungen mit Lösungen, die die Epoxidkomponente aus Beispiel 1 enthalten, ist die Rauhtiefe kleiner als 5 µm.

Bei Beschichtungen mit Lösungen, die die Epoxidkomponente aus Beispiel 2 enthalten, ist die Rauhtiefe kleiner als 1 µm.

## Patentansprüche

1. Beschichtungsmittel auf der Basis von polyfunktionellen Epoxidverbindungen und Härtern, **dadurch gekennzeichnet,** daß sie als Epoxid-Komponente Umsetzungsprodukte aus polyfunktionellen Epoxidverbindungen und gesättigten oder ungesättigten Monocarbonsäuren enthalten, bei denen 5 bis 70 % der Epoxidgruppen mit Monocarbonsäuren mit mindestens 3 C-Atomen verestert sind, wobei die polyfunktionellen Epoxidverbindungen Umsetzungsprodukte aus Epichlorhydrin und mindestens einer di- oder polyfunktionellen stickstoffhaltigen Verbindung aus der Gruppe Dodecylhydro-1,4,7,9'-tetraazaphenalen, Anilin, der Xylylendiamine, p-Phenylendiamin, 4,4'-Methylendianilin und 4,4'-Diaminodiphenylsulfon sind.

2. Beschichtungsmittel nach Anspruch 1, **dadurch gekennzeichnet,** daß die polyfunktionelle Epoxidverbindung Tetraglycidylmethylendianilin ist.

3. Beschichtungsmittel nach den Ansprüchen 1 und 2, **dadurch gekennzeichnet,** daß 10 bis 40 % der Epoxidgruppen mit Monocarbonsäuren verestert sind.

4. Beschichtungsmittel nach den Ansprüchen 1 bis 3, **dadurch gekennzeichnet,** daß die Epoxidkomponente mit Stearin- und/oder Palmitinsäure umgesetzt ist.

5. Verfahren zur Herstellung von Beschichtungsmitteln nach den Ansprüchen 1 bis 4, **dadurch gekennzeichnet,** daß 5 bis 70 % der Epoxidgruppen eines Umsetzungsproduktes aus Epichlorhydrin und mindestens einer di- oder polyfunktionellen stickstoffhaltigen Verbindung aus der Gruppe Dodecylhydro-1,4,7,9'-tetraazaphenalen, Anilin, der Xylylendiamine, p-Phenylendiamin, 4,4'-Methylendianilin und 4,4'-Diaminodiphenylsulfon mit einer oder mehreren gesättigten oder ungesättigten Monocarbonsäure umgesetzt werden und dieses Produkt mit einem Härter und ggf. weiteren Hilfs- und Zusatzmitteln vermischt wird.

## Claims

1. Coating agents based on multi-functional epoxy compounds and hardeners, **characterized in that** they contain an epoxy component in the form of reaction products of multi-functional epoxy compounds and saturated or unsaturated monocarboxylic acids, in which from 5 to 70% of the epoxy groups are esterified with monocarboxylic acids having at least 3 carbon atoms, the multi-functional epoxy compounds being reaction products of epichlorhydrin and at least one bi- or multi-functional nitrogen-containing compound from the group dodecylhydro-1,4,7,9'-tetraazaphenalene, aniline, xylylene diamines, p-phenylenediamine, 4,4'-methylenedianiline and 4,4'-diaminodiphenylsulphone.

2. Coating agents according to Claim 1, **characterized in that** the multi-functional epoxy compound is tetraglycidylmethylenedianiline.

3. Coating agents according to Claims 1 and 2, **characterized in that** from 10 to 40% of the epoxy groups are esterified with monocarboxylic acids.

4. Coating agents according to Claims 1 to 3, **characterized in that** the epoxy component is reacted with stearic and/or palmitic acid.

5. A method of preparing coating agents according to Claims 1 to 4, **characterized in that** from 5 to 70% of the epoxy groups of a reaction product of epichlorhydrin and at least one bi- or multi-functional nitrogen-containing compound from the group dodecylhydro-1,4,7,9'-tetraazaphenalene, aniline, xylylene diamines, p-phenylenediamine, 4,4'-methyl-enedianiline and 4,4'-diaminodiphenylsulphone are reacted with one or more saturated or unsaturated monocarboxylic acids, and this product is mixed with a hardener and, optionally, further adjuvants and additives.

## Revendications

1. Liants pour revêtement à base de composés époxydes polyfonctionnels et de durcisseurs, caractérisés en ce qu'ils contiennent en tant que composant époxyde des produits de réaction obtenus à partir de composés époxydes polyfonctionnels et d'acides monocarboxyliques saturés ou insaturés, dans lesquels 5 à 70% des groupes époxy sont estérifiés avec des acides monocarboxyliques ayant au moins 3 atomes de C, les composés époxydes polyfonctionnels étant des produits de réaction provenant d'épichlorhydrine et d'au moins un composé azoté di- ou polyfonctionnel du groupe des dodécylhydro-1,4,7,9'-tétraazaphénalène, aniline, xylylènediamines, p-phénylènediamine, 4,4'-méthylène-dianiline et 4,4'-diaminodiphénylsulfone.

2. Liants pour revêtement selon la revendication 1, caractérisés en ce que le composé époxyde polyfonctionnel est la tétraglydidylméthylènediamine.

3. Liants pour revêtement selon les revendications 1 et 2, caractérisés en ce que 10 à 40% des groupes époxy sont estérifiés avec des acides monocarboxyliques.

4. Liants pour revêtement selon les revendications 1 à 3, caractérisés en ce que le composant époxyde est mis à réagir avec de l'acide stéarique et/ou palmitique.

5. Procédé pour la préparation de liants pour revêtement selon les revendications 1 à 4, caractérisé en ce que 5 à 70% des groupes époxy d'un produit de réaction obtenu à partir d'épichlorhydrine et d'au moins un composé azoté di- ou polyfonctionnel du groupe des dodécyl-hydro-1,4,7,9' -tétraazaphénalène, aniline, xylylène-diamines, p-phénylènediamine, 4,4'-méthylène-dianiline et 4,4'-diaminodiphénylsulfone sont mis à réagir avec un ou plusieurs acides monocarboxyliques saturés ou insaturés et que ce produit est mélangé avec un durcisseur et éventuellement avec d'autres additifs et adjuvants.
